(19) Europäisches Patentamt
European Patent Office
Office européen des brevets

(11) **EP 2 999 155 B1**

(12) **EUROPEAN PATENT SPECIFICATION**

(45) Date of publication and mention
of the grant of the patent:
**13.06.2018 Bulletin 2018/24**

(51) Int Cl.:
*H04L 1/06* (2006.01)    *H04B 7/04* (2017.01)
*H04B 7/0452* (2017.01)   *H04B 7/0456* (2017.01)
*H04B 7/02* (2018.01)    *H04B 7/024* (2017.01)

(21) Application number: **14820594.1**

(22) Date of filing: **03.07.2014**

(86) International application number:
**PCT/CN2014/081573**

(87) International publication number:
**WO 2015/000423 (08.01.2015 Gazette 2015/01)**

(54) **PRECODING METHOD AND DEVICE**

VERFAHREN UND VORRICHTUNG ZUR VORCODIERUNG

PROCÉDÉ ET DISPOSITIF DE PRÉCODAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.07.2013 CN 201310277308**

(43) Date of publication of application:
**23.03.2016 Bulletin 2016/12**

(73) Proprietor: **Huawei Technologies Co., Ltd.
Longgang District
Shenzhen, Guangdong 518129 (CN)**

(72) Inventors:
• **QIAO, Deli
Shenzhen
Guangdong 518129 (CN)**
• **WU, Ye
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**CN-A- 101 695 008    CN-A- 101 938 837
CN-A- 102 291 834    CN-A- 102 647 216
CN-A- 102 710 390    US-A1- 2013 034 187**

• **DABBAGH A D ET AL: "Precoding for Multiple
Antenna Gaussian Broadcast Channels With
Successive Zero-Forcing", IEEE
TRANSACTIONS ON SIGNAL PROCESSING,
IEEE SERVICE CENTER, NEW YORK, NY, US, vol.
55, no. 7, 1 July 2007 (2007-07-01), pages
3837-3850, XP011185811, ISSN: 1053-587X, DOI:
10.1109/TSP.2007.894285**

## Description

### TECHNICAL FIELD

The present invention relates to the field of wireless communications technologies and, in particular, to a precoding method and device.

### BACKGROUND

In a next generation of cellular wireless communication technology (5G), an increase in the number of antennas at a transmitting end side has been widely acknowledged by the industry. Especially when the number of antennas is large, a lot of characteristics may be utilized, for instance, correlations between channels formed by different users and a transmitting end are relatively small, and small-scale fading and thermal noise may be averaged out. In a large-scale antenna system, the transmitting end may serve a plurality of users, each equipped with a single antenna, to form spatial multiplexing, which is also known as MU-MIMO (Multi-User Multi-Input Multi-Output), thus properties such as system throughput and energy efficiency can be enhanced. During downlink transmission, since the number of antennas is large, beamforming may be used, so that information transmitted to a given user will not cause interference to other users within a cell.

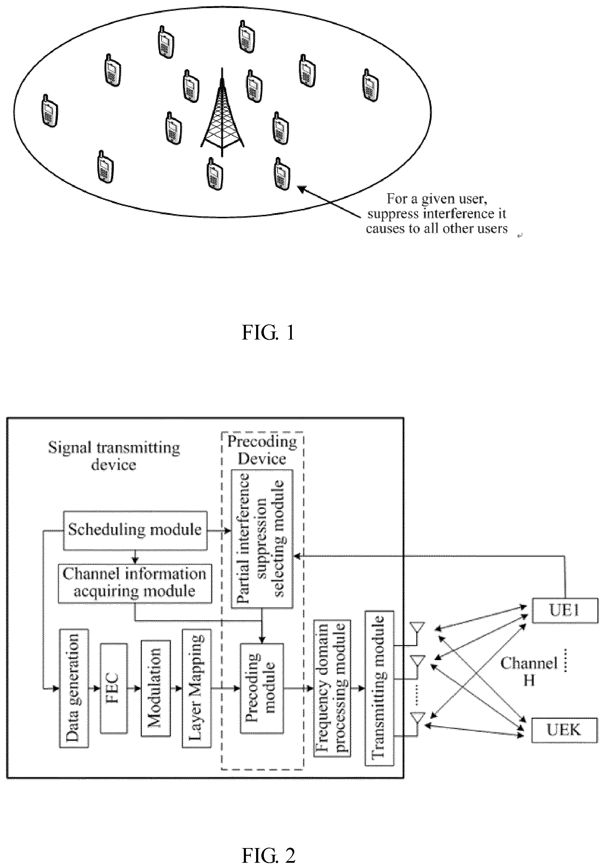

There are mainly a ZF (Zero-Forcing, zero-forcing) technology and an MF (Matched-Filtering, matched-filtering) technology in current precoding technologies. The MF precoding technology has less complexity, but interference between users cannot be eliminated. As shown in FIG. 1, for a given user, the ZF precoding technology may suppress interference it causes to all other users. Although the ZF precoding technology may eliminate the interference between users, it has higher complexity, especially when there are a lot of served users, complexity of matrix inversion will be increased significantly.

The complexity is closely related to energy consumption at the transmitting end side, and reduction of the energy consumption will be one of the focuses of 5G in the future. Taking a power model (power model) proposed on Green Touch (an alliance aimed at transforming communications and data networks, and greatly reducing carbon emission of communication devices, platforms and networks) as an example, energy consumption caused by the ZF precoding may reach 80% of the total energy consumption. If the precoding complexity is reduced by 50%, total energy efficiency may be increased by more than 66.7%.

In addition, the complexity is closely related to delay. As revealed in some literatures, the time consumed by a 15x15 matrix inversion will amount to 150$\mu$s, equivalent to 30% of 500$\mu$s of coherence time given in an LTE (Long Term Evolution, long term revolution) system. Moreover, an operation of the matrix inversion needs to be conducted on each coherent bandwidth, which will incur a great delay, and the delay is intolerable time consumption for a delay-sensitive system, such as the LTE.

A currently existing linear precoding method does not put high requirements on system design when the number of antennas is small and the number of users is small. However, when the number of antennas is large, the current precoding technology obtains high performance while computation complexity is very high; and the computation complexity not only will render a system delay, but also will produce great impacts on energy consumption of the transmitting end.

Thus, it can be seen that, a precoding scheme is needed urgently so as to reduce precoding computation complexity.

DABBAGH A D ET AL: "Precoding for Multiple Antenna Gaussian Broadcast Channels With Successive Zero-Forcing", IEEE TRANSACTIONS ON SIGNAL PROCESSING, IEEE SERVICE CENTER, NEW YORK, NY, US, vol. 55, no. 7, 1 July 2007 (2007-07-01), pages 3837-3850, XP011185811, ISSN: 1053-587X, DOI: 10.1109/TSP.2007.894285 discloses precoding for multiple antenna gaussian broadcast channels with successive zero-forcing, in particular, given an ordered set of users $S$, the base station designs the precoding matrix of each user according to the null space constraint as in Section III, i.e., the precoding matrix $B_{\pi(j)}$, which corresponds to user $\pi(j)$ in $S$ is constrained to lie in the null space of $\overline{H}_S^{j-1}$. However, in contrast to the SZFDPC transmission scheme, the base station does not employ a DPC scheme and users design their receivers such that the remaining interference from other users' transmitted signals is treated as a Gaussian noise that is independent of the desired signal. (see page 7, column 1, last paragraph)

US 2013/034187 A1 discloses a precoding weight generation method and control apparatus, in particular, in generating precoding weights in the cell #1, precoding weights are generated so as to preferentially suppress interference on the mobile station apparatuses UE#3 and UE#4 (that correspond to the mobile station apparatus UE-N$_{K=1}$) that do not transmit the CSI as feedback except the cell #1, while not suppressing interference on the other mobile station apparatuses, UE#1 and UE#2. Then, in generating precoding weights in the cell #2, the mobile station apparatuses UE#3 and UE#4 on which interference is already suppressed are excepted, and precoding weights are generated so as to preferentially suppress interference on the mobile station apparatuses UE#1 and UE#2 (that correspond to the mobile station apparatus UE-$N_{K=2}$) that do not transmit the CSI as feedback except the cells #1 and #2, while not suppressing interference on the other mobile station apparatuses UEs (that do not exist in FIG. 1). In addition, precoding weights for the mobile station apparatuses UE#1 and UE#2 that are generated in the cell #1 are referred to, in the case of generating precoding weights for the mobile station apparatus apparatuses UE#1 and UE#2 in the cell #2. Similarly, a precoding weight $W_{eNB1,UE2}$ for the mobile station apparatus UE#2 is calculated by (Eq. 5) using a channel matrix $H''_{eNB1}$ expressed by (Eq. 4) that is a partial matrix of the channel matrix $H_{eNB1}$. Herein, the channel matrix $H''_{eNB1}$ is comprised of the CSI ($h_{12}$, $h_{13}$, $h_{14}$) of the mobile station apparatuses UE#2, UE#3 and UE#4 without the mobile station apparatus #UE1. (see paragraph [0035] and [0041])

## SUMMARY

Embodiments of the present invention provide a precoding method and device, which are used to reduce coding computation complexity.

In a first aspect, a precoding method in wireless communication is provided, including:

acquiring all scheduled users on a resource block of Orthogonal Frequency Division Multiplexing, OFDM, system, and selecting, within a range of all the scheduled users on the resource block, a user set used for partial interference suppression for each to-be-scheduled user on the resource block; and

computing a precoding vector for each scheduled user according to a matrix formed by channel estimations of all users in the user set used for the partial interference suppression corresponding to each scheduled user, and precoding data of each scheduled user according to the computed precoding vector for each scheduled user.

wherein the selecting, within a range of all the scheduled users on the resource block, a user set used for partial interference suppression for each scheduled user on the resource block specifically includes:

selecting, according to distances between the scheduled users on the resource block and a transmitting end device, within the range of all the scheduled users on the resource block, the user set used for the partial interference suppression for each scheduled user on the resource block; or

selecting, according to channel coherence between the scheduled users on the resource block, within the range of all the scheduled users on the resource block, the user set used for the partial interference suppression for each scheduled user on the resource block.

With reference to the first aspect, in a first possible implementation of the first aspect, the selecting, according to distances between each scheduled users on the resource block and the transmitting end device, within the range of all the scheduled users on the resource block, the user set used for the partial interference suppression for each scheduled user on the resource block specifically includes:

determining a distance between each scheduled user on the resource block and the transmitting end device;

according to the distance between each scheduled user on the resource block and the transmitting end device, selecting a set number of scheduled users therefrom in a near to far order; and

determining the set number of selected scheduled users as the user set used for the partial interference suppression corresponding to each scheduled user on the resource block.

With reference to the first aspect or the first possible implementation of the first aspect, in a second possible implementation, according to the distances between the to-be-scheduled users on the resource block and the transmitting end device, the precoding vector computed for each scheduled user on the resource block is:

if a scheduled user is a user in the user set used for the partial interference suppression, then the precoding vector of the scheduled user is:

$$ V_k = \left[ H_{cluster}^{H} (H_{cluster} H_{cluster}^{H})^{-1} \right]_k $$

if a scheduled user is a user out of the user set used for the partial interference suppression, then the precoding vector of the scheduled user is:

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1$$

where, $V_k$ represents a precoding vector of a user k in the user set, $V_n$ represents a precoding vector of a user n out of the user set; *cluster* represents the matrix formed by the channel estimations of all the users in the user set used for the partial interference suppression; $\hat{\underline{h}}_n$ represents a channel estimation between the user n and the transmitting end device, $H_{cluster}^H$ represents conjugate transpose of $H_{cluster}$, $[\bullet]_k$ represents a kth column of a matrix, and $[\bullet]^H$ represents conjugate transpose of a matrix.

With reference to the first aspect, in a third possible implementation, the selecting, according to channel coherence between the scheduled users on the resource block, within the range of all the scheduled users on the resource block, the user set used for the partial interference suppression for each scheduled user on the resource block specifically includes:

determining the channel coherence between the scheduled users on the resource block;
for each scheduled user on the resource block, according to channel coherence between a scheduled user and other scheduled users, selecting a set number of to-be-scheduled users therefrom in a big to small order as the user set used for the partial interference suppression of the scheduled user.
With reference to the third possible implementation of the first aspect, in a fourth possible implementation, according to the channel coherence between the scheduled users on the resource block, the precoding vector computed for each scheduled user on the resource block is:

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1$$

where, $V_n$ represents a precoding vector of a user n, $n_c$ represents a number of the users in the user set used for the partial interference suppression; *cluster* represents the matrix formed by the channel estimations of all the users in the user set used for the partial interference suppression corresponding to the user n;

$$H_{cluster} = \begin{bmatrix} \hat{\underline{h}}_{\pi(1)} \\ \vdots \\ \hat{\underline{h}}_{\pi(n_c)} \end{bmatrix},$$ where $\pi$ represents a small to big sequence order of channel coherence between other users and the user n, and $\pi(1)$ represents a user having smallest channel coherence with the user n; $\hat{\underline{h}}_n$ represents a channel estimation between a user out of the user set used for the partial interference suppression and the transmitting end device, $H_{cluster}^H$ represents conjugate transpose of $H_{cluster}$, $[\bullet]_k$ represents a kth column of a matrix, and $[\bullet]^H$ represents conjugate transpose of a matrix.

In a second aspect, a precoding device in wireless communication is provided, including:

a partial interference suppression selecting module, configured to acquire all scheduled users on a resource block of Orthogonal Frequency Division Multiplexing, OFDM, system, and select, within a range of all the scheduled users on the resource block, a user set used for partial interference suppression for each scheduled user on the resource block; and

a precoding module, configured to compute a precoding vector for each scheduled user according to a matrix formed by channel estimations of all users in the user set used for the partial interference suppression that is corresponding to each scheduled user and selected by the partial interference suppression selecting module, and precode data of each scheduled user according to the computed precoding vector for each scheduled user;

wherein the partial interference suppression selecting module is specifically configured to: select, according to distances between the scheduled users on the resource block and a transmitting end device, within the range of all the scheduled users on the resource block, the user set used for the partial interference suppression for each scheduled user on the resource block; or

select, according to channel coherence between the scheduled users on the resource block, within the range of all the scheduled users on the resource block, the user set used for the partial interference suppression for each scheduled user on the resource block.

With reference to the second aspect, in a first possible implementation, the partial interference suppression selecting module is specifically configured to: determine a distance between each scheduled user on the resource block and the transmitting end device; according to the distance between each scheduled user on the resource block and the transmitting end device, select a set number of scheduled users therefrom in a near to far order; and determine the set number of selected scheduled users as the user set used for the partial interference suppression corresponding to each scheduled user on the resource block.

With reference to the second aspect or the first possible implementation of the second aspect, in a second possible implementation, the precoding module is specifically configured to: according to the distances between the scheduled users on the resource block and the transmitting end device, the precoding vector computed for each scheduled user on the resource block is:

if a scheduled user is a user in the user set used for the partial interference suppression, then the precoding vector of the scheduled user is:

$$ V_k = \left[ H_{cluster}^{H} \left( H_{cluster} H_{cluster}^{H} \right)^{-1} \right]_k $$

if a scheduled user is a user out of the user set used for the partial interference suppression, then the precoding vector of the scheduled user is:

$$ V_n = \left[ \begin{bmatrix} \hat{\underline{h}}_n \\ H_{cluster} \end{bmatrix}^{H} \left( \begin{bmatrix} \hat{\underline{h}}_n \\ H_{cluster} \end{bmatrix} \begin{bmatrix} \hat{\underline{h}}_n \\ H_{cluster} \end{bmatrix}^{H} \right)^{-1} \right]_1 $$

where $V_k$ represents a precoding vector of a user k in the user set, $V_n$ represents a precoding vector of a user n out of the user set; *cluster* represents the matrix formed by the channel estimations of all the users in the user set used for the partial interference suppression; $\hat{\underline{h}}_n$ represents a channel estimation between the user n and the transmitting end device, $H_{cluster}^{H}$ represents conjugate transpose of $H_{cluster}$, $[\bullet]_k$ represents a kth column of a matrix, and $[\bullet]^H$ represents conjugate transpose of a matrix.

With reference to the second aspect, in a third possible implementation, the partial interference suppression selecting module is specifically configured to: determine the channel coherence between the scheduled users on the resource block; for each scheduled user on the resource block, according to channel coherence between a scheduled user and other scheduled users, select a set number of scheduled users therefrom in a big to small order as the user set used for the partial interference suppression of the scheduled user.

With reference to the third possible implementation of the second aspect, in a fourth possible implementation, the precoding module is specifically configured to: according to the channel coherence between the scheduled users on the resource block, the precoding vector computed for each scheduled user on the resource block is:

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1$$

where $V_n$ represents a precoding vector of a user n, nc represents the number of users in the user set used for the partial interference suppression; $H_{cluster}$ represents the matrix formed by the channel estimations of all the users in the user

$$H_{cluster} = \begin{bmatrix} \hat{h}_{\pi(1)} \\ \vdots \\ \hat{h}_{\pi(n_c)} \end{bmatrix}$$

set used for the partial interference suppression corresponding to the user n; , where $\pi$ represents a small to big sequence order of channel coherence between other users and the user n, and $\pi(1)$ represents a user having smallest channel coherence with the user n; $\hat{\underline{h}}_n$ represents a channel estimation between a user out of the user set used for the partial interference suppression and the

transmitting end device, $H_{cluster}^H$ represents conjugate transpose of $H_{cluster}$, $[\bullet]_k$ represents a kth column of a matrix, and $[\bullet]^H$ represents conjugate transpose of a matrix.

In a third aspect, a signal transmitting device is provided, including a precoding device in wireless communication according to the second aspect or any possible implementation of the second aspect, and a scheduling module, a channel information acquiring module, a data preprocessing module and a frequency domain processing module which are connected to the precoding device, and a transmitting module connected to the frequency domain processing module, where the precoding device includes a partial interference suppression selecting module and a precoding module, and where:

the scheduling module is configured to provide information of all scheduled users on a resource block of Orthogonal Frequency Division Multiplexing, OFDM, system to the precoding device;

the channel information acquiring module is configured to acquire channel estimation information of the users and provide same to the precoding device;

the data preprocessing module is configured to preprocess data of the users and provide same to the precoding device;

the frequency domain processing module is configured to convert frequency domain data precoded by the precoding device to a time domain signal; and

the transmitting module is configured to transmit the time domain signal processed by the frequency domain processing module.

In embodiments of the present invention as described above, a user set used for partial interference suppression is selected for each scheduled user on a resource block within a range of all the scheduled users on the resource block, and a precoding vector is computed for a current scheduled user according to the user set used for the partial interference suppression corresponding to the current scheduled user, and thus, for a given user, interference it causes to other users within a certain range is suppressed, and precoding computation complexity is reduced in the premise that interference suppression is achieved.

**BRIEF DESCRIPTION OF DRAWINGS**

FIG. 1 is a schematic diagram of a ZF precoding scenario in the prior art;

FIG. 2 is a schematic diagram of an internal structure of a signal transmitting device according to an embodiment of the present invention;

FIG. 3 is a schematic diagram of partial suppression precoding according to an embodiment of the present invention;

FIG. 4 is a process of selecting a user set based on distance with a transmitting end device in embodiment 1 of the present invention;

FIG. 5 is a process of selecting a user set based on channel coherence between users in embodiment 2 of the present invention;

FIG. 6 is a first schematic comparison diagram of CDFs of SIRs of a system according to an embodiment of the present invention;

FIG. 7 is a second schematic comparison diagram of CDFs of SIRs of a system according to an embodiment of the present invention;

FIG. 8 is a schematic structural diagram of a precoding device according to an embodiment of the present invention;

FIG. 9 is a schematic structural diagram of a signal transmitting device according to an embodiment of the present invention.

## DESCRIPTION OF EMBODIMENTS

In order to reduce precoding computation complexity, embodiments of the present invention provide a precoding scheme, when MU-MIMO scheduling is performed at a transmitting end, a distinction is made to users scheduled each time based on user feedback information or transmitting end measurement, a user set used for partial interference suppression is selected for each to-be-scheduled user, and a precoding vector corresponding to each to-be-scheduled user is computed according to channel estimations of the user set used for partial interference suppression.

During application in a large-scale antenna cellular communication system, embodiments of the present invention may significantly reduce the precoding computation complexity.

A specific implementation process of embodiments of the present invention will be described in detail hereunder by taking an OFDM (Orthogonal Frequency Division Multiplexing, orthogonal frequency division multiplexing) system as an example. It should be noted that, although the embodiments of the present invention take the OFDM system as an example, they are not limited to the OFDM system, and are applicable to all large-scale antenna systems, which may be, for instance, an FDMA (Frequency Division Multiple Access, frequency division multiple access) system, a TDMA (Time Division Multiple Access, time division multiple access) system, a CDMA (Code Division Multiple Access, code division multiple access) system, or the like.

In a TDD (Time Division Duplexing, time division duplexing) system, a channel is estimated by a UE (User Equipment, i.e. a terminal) transmitting an uplink pilot, and a transmitting end device (such as a base station) has already known the channel estimation with the user.

Embodiments of the present invention may be implemented by introducing a partial interference suppression selecting function at a transmitting end device side, and making relevant improvements to a precoding function. Descriptions will be made hereunder by taking a structure of a transmitting end device as shown in FIG. 2 as an example.

Reference may be made to FIG. 2, which is a schematic diagram of an internal structure of a transmitting end device according to an embodiment of the present invention. In FIG. 2, main function modules related to the precoding scheme provided in the embodiments of the present invention include a partial interference suppression selecting module and a precoding module. Compared with an existing transmitting end device, the partial interference suppression selecting module is a function module newly added in the embodiments of the present invention, and a precoding vector computation method employed by the percoding module is also improved correspondingly.

An input of the partial interference suppression selecting module includes user feedback information and IDs of users scheduled on each time frequency resource block provided by a scheduling module, and an output is a user set used for partial interference suppression corresponding to each scheduled user on each time frequency resource block (for convenient descriptions, hereafter referred to as a user set for short). The partial interference suppression selecting module is mainly configured to: for each scheduled user on each time frequency resource block, select, within a range of all scheduled users on a current time frequency resource block, a user set for the scheduled user according to the user feedback information. Optionally, the transmitting end device measurement information may serve as the input of the partial interference suppression selecting module by replacing the user feedback information.

User set information output by the partial interference suppression selecting module is taken as an input of the precoding module, and another input of the precoding module comes from channel estimation matrix information output by a channel information acquiring module, and an output of the precoding module is a precoding vector of each scheduled user. The precoding module is mainly configured to: for each scheduled user, compute a precoding vector for the scheduled user according to channel estimation matrix information of all users in the user set of the scheduled user.

A data preprocessing module provides preprocessed user data to the precoding module, and the precoding module precodes the preprocessed data according to the computed precoding vector corresponding to a corresponding user, and a frequency domain processing module converts precoded data to a frequency domain signal and provides the same to a transmitting module for transmission. A processing procedure of the data preprocessing module usually includes data generation, FEC (Forward Error Correction, forward error correction), data modulation, Layer Mapping (layer mapping), etc; the frequency domain processing module generally uses an IFFT (Inverse Fast Fourier Transform) algorithm for processing, and may further insert a CP (a cyclic prefix) to the inverse fast Fourier transformed data.

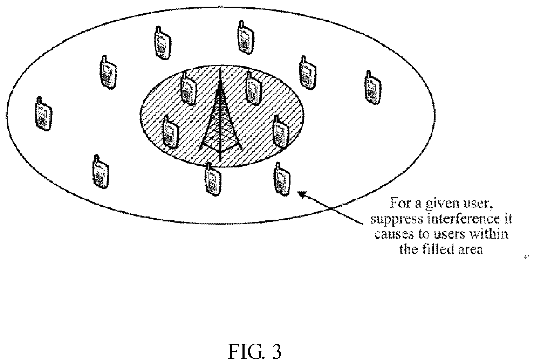

FIG. 3 shows a schematic diagram of partial suppression precoding according to an embodiment of the present invention.

Preferably, a precoding algorithm employed by a precoding module may be obtained by improving an existing ZF precoding algorithm, which mainly differs from the existing ZF precoding algorithm in that: the improved ZF precoding algorithm in the embodiments of the present invention targets at a user set corresponding to each scheduled user to compute a precoding vector for each scheduled user respectively. By means of improving the existing ZF algorithm, interference from a scheduled user to a user in the user set of the scheduled user may be eliminated on one hand, thereby ensuring certain system performance, and precoding computation complexity is reduced on the other hand.

The number of users included by the user set may be preset. The number of users in the user set may be determined according to a compromise between the precoding computation complexity and performance loss. The larger the number of users, then the higher the precoding computation complexity is, but the perform loss is less; on the contrary, the smaller the number of users, then the lower the precoding computation complexity, but the performance loss is greater.

There may be a plurality of manners for selection of a user to perform interference suppression, for instance, according to distances between scheduled users and a transmitting end device, or according to channel coherence between scheduled users, and in a multi-cell cooperative communication scenario, scheduled users within part of cells may also be selected as members of the user set used for interference suppression. According to different manners for selection of a user used for interference suppression, correspondingly, methods for computing a precoding vector of a scheduled user may also be different. Three preferred embodiments will be used hereunder for a detailed description.

**Embodiment 1**

An embodiment of the present invention describes a process of selecting, according to distances between scheduled users on a resource block and a transmitting end device, a user set for each scheduled user on the resource block, and computing a precoding vector for each scheduled user according to the selected user set, respectively.

This embodiment is described according to an example where a modulation mode of QPSK (Quadrature Phase Shift Keying, quadrature phase shift keying) is used in an LTE system. Considering that small-scale fading and thermal noise may be averaged out when the number of antennas is large, a typical selecting manner for interference suppression is: selecting a user having a closest distance to the transmitting end, that is, selecting, according to the distance between each scheduled user on the resource block and the transmitting end device, a set number of scheduled users therefrom in a near to far order, thereby forming a user set. The user set may serve as a user set corresponding to each scheduled user in the user set, that is, for each scheduled user in the user set, corresponding user sets are the same.

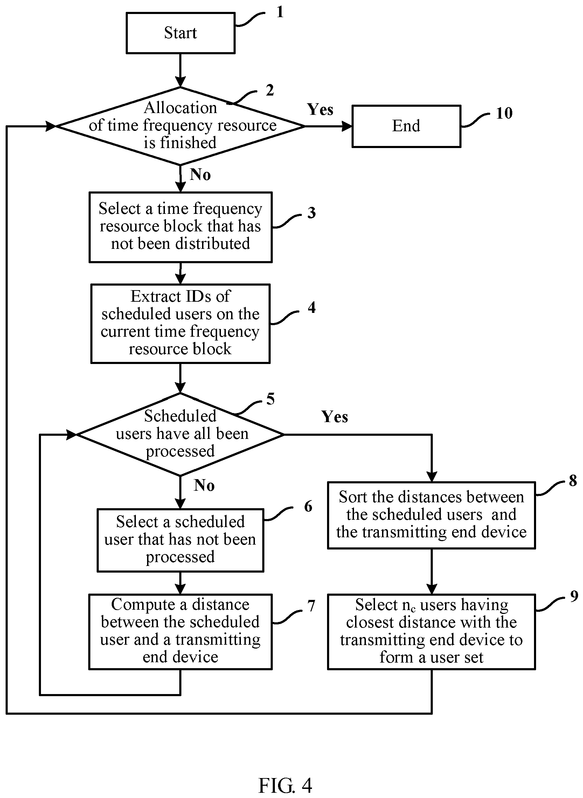

FIG. 4 shows a preferable process of selecting a user set based on distance with a transmitting end device, the process is performed by a partial interference suppression selecting module, and may include the following steps:

Step 1: an interference suppression selection algorithm starts. Generally, when a scheduling period arrives, start the interference suppression selection algorithm, for instance, when MU-MIMO scheduling is performed, start the interference suppression selection algorithm;

Step 2: determine whether allocation of time frequency resource available for a system is currently finished, if so, then proceed with step 10, otherwise proceed with step 3;

Step 3: select a time frequency resource block that has not been allocated as a current time frequency resource block to be processed. During a specific implementation, a time frequency resource block may be selected sequentially from time frequency resource blocks that have not been allocated;

Step 4: extract information of scheduled users on the current time frequency resource block, such as IDs of the scheduled users;

Step 5: determine whether the scheduled users on the current time frequency resource block have all been processed (that is, a distance between a scheduled user and a transmitting end device has been computed), if so, then proceed with step 8, otherwise proceed with step 6;

Step 6: select a scheduled user that has not been processed (that is, the distance between the scheduled user and the transmitting end device has not been computed) on the current time frequency resource block. During a specific implementation, a scheduled user may be selected sequentially from scheduled users that have not been processed on the current time frequency resource block;

Step 7: for the scheduled user selected in step 6, compute the distance between the scheduled user and the transmitting end device. During a specific implementation, the distance between the scheduled user and the transmitting end device may be determined according to geographic position information fed back by the scheduled user. Generally, when performing network attachment or location update, a user will report a location where it currently locates to a network side. The distance between the scheduled user and the transmitting end device may also be determined by other methods, for instance, acquiring location information of the user from a location server or other devices that can provide the location information of the user.

Step 8: sort the distances between the scheduled users on the current time frequency resource block and the transmitting end device in sequence. During a specific implementation, sorting methods such as merge sort or quick sort may be employed;

Step 9: select $n_c$ users having closest distance with the transmitting end device to form a user set, where a value of $n_c$ may be preset. There may be different values according to requirements, the larger the $n_c$, then the higher the complexity, but performance loss is less; on the contrary, the smaller the $n_c$, then the lower the complexity, but performance loss is greater;

Step 10: the partial interference suppression user selection algorithm ends.

Since at a specific moment, users nearer the transmitting end device are given, that is, for all scheduled users on a time frequency resource block, users nearer the transmitting end device of these users are the same, and in this case, all scheduled users on a time frequency resource block are corresponding to the same user set. Thus, after the transmitting end device obtains distances between all scheduled users on a current time frequency resource block and the transmitting end device and sorts the same, the obtained user set is applicable to all the scheduled users on the time frequency resource block.

In a precoding module, for a scheduled user in the user set, a precoding vector is provided by equation (1):

$$V_k = \left[ H_{cluster}^{H} (H_{cluster} H_{cluster}^{H})^{-1} \right]_k \ \dots\dots\dots\dots\dots\dots\dots \ (1)$$

For a scheduled user out of the user set, a precoding vector is provided by equation (2):

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1 \ \dots\dots \ (2)$$

where $V_k$ represents a precoding vector of a user k (the user k is a scheduled user in the user set), $V_n$ represents a precoding vector of a user n (the user n is a scheduled user out of the user set); $n_c$ represents the number of users in the user set; $H_{cluster}$ represents the matrix formed by the channel estimations of all users in the user set (herein refers to a matrix formed by channel estimations of $n_c$ users having closest distance with the transmitting end device); $\hat{\underline{h}}_n$ represents a channel estimation between the user n and the transmitting end device, $H_{cluster}^{H}$ represents conjugate transpose of $H_{cluster}$, $[\bullet]_k$ represents a $k^{th}$ column of a matrix, and $[\bullet]^H$ represents conjugate transpose of a matrix.

## Embodiment 2

An embodiment of the present invention describes a process of selecting, according to channel coherence between scheduled users on a resource block, a user set for each scheduled user on the resource block, and computing a precoding vector for each scheduled user according to the selected user set, respectively.

In the embodiment of the present invention, when selecting a user set for each scheduled user, a partial interference suppression selecting module selects $n_c$ users ($n_c$ is the given number of users in the user set) channels of which are most related to a channel of a current scheduled user.

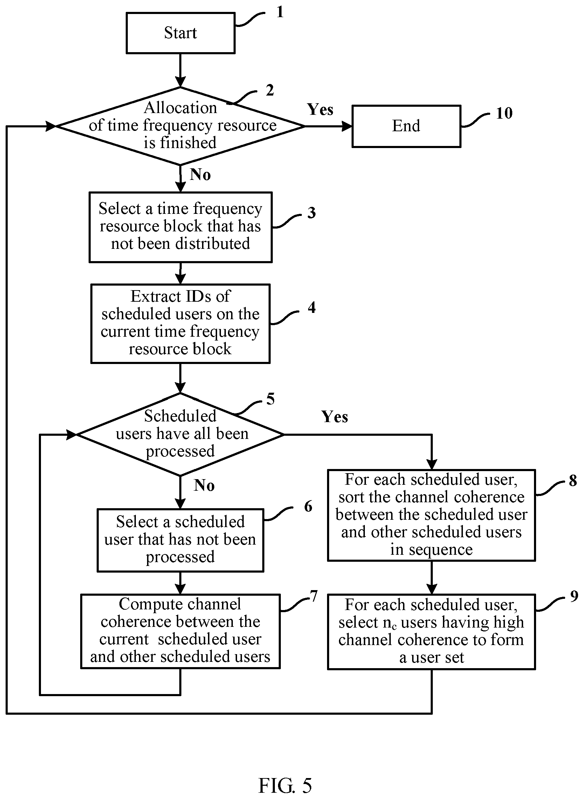

FIG. 5 shows a preferable process of selecting a user set based on channel coherence between users, the process is performed by a partial interference suppression selecting module, and may include the following steps:

Step 1: an interference suppression selection algorithm starts;

Step 2: determine whether allocation of time frequency resource available for a current system is finished, if so, then proceed with step 10, otherwise proceed with step 3;

Step 3: select a time frequency resource block that has not been allocated as a current time frequency resource block to be processed. During a specific implementation, a time frequency resource block may be selected sequentially from time frequency resource blocks that have not been allocated;

Step 4: extract information of scheduled users on the current time frequency resource block, such as IDs of the scheduled users;

Step 5: determine whether the scheduled users on the current time frequency resource block have all been processed (that is, channel coherence between a scheduled user and other users on the current time frequency resource block is computed), if so, then proceed with step 8, otherwise proceed with step 6;

Step 6: select a scheduled user that has not been processed (that is, channel coherence has not been computed) on the current time frequency resource block. During a specific implementation, a scheduled user may be selected sequentially from scheduled users that have not been processed on the current time frequency resource block;

Step 7: for the scheduled user selected in step 6, compute channel coherence between the scheduled user and other scheduled users on the current time frequency resource block. An example is taken where a user n represents a current scheduled user (i.e. the scheduled user selected in Step 6), the computing of the channel coherence between the user n and other scheduled users on the current time frequency resource block refers to: respectively computing amplitude values mapped by channels of other scheduled users on a channel of the user n, that is, computing amplitude values of $\hat{\underline{h}}_j \hat{\underline{h}}_n^H$, $j \neq n$, where $\hat{\underline{h}}_n^H$ represents conjugate transpose of a channel estimation of the user n, $\hat{\underline{h}}_j$ represents a channel estimation of a user j, and the user n and the user j are scheduled users on a same time frequency resource block.

Step 8: for each scheduled user on the current time frequency resource block, sort the channel coherence between the current scheduled user and other scheduled users on the current time frequency resource block in sequence;

Step 9: for each scheduled user on the current time frequency resource block, according to a sorting result in step 8, select $n_c$ users having high channel coherence to form a user set, and the user set is denoted as $\{\pi(1),\pi(2),...,\pi(n_c)\}$, where $\pi$ represents a small to big sequence order of channel coherence between other users and the user n, $\pi(1)$ represents a user having smallest channel coherence with the user n, and so forth;

Step 10: the partial interference suppression user selection algorithm ends.

In the above process, since for each scheduled user, $n_c$ users having highest channel coherence with the scheduled user may be different, and thus, a transmitting end device needs to select a user set for each scheduled user.

In a precoding module, for each scheduled user, a precoding vector is provided by equation (3):

$$ V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1 \quad \cdots\cdots (3) $$

where $V_n$ represents a precoding vector of a user n; $n_c$ represents the number of users in the user set; $H_{cluster}$ represents a matrix formed by channel estimations of all users in the user set of the user n (herein refers to a channel estimation matrix formed by $n_c$ users having largest channel mapping amplitudes with the user n),

$$ H_{cluster} = \begin{bmatrix} \hat{h}_{\pi(1)} \\ \vdots \\ \hat{h}_{\pi(n_c)} \end{bmatrix} ; \quad \hat{\underline{h}}_n $$

represents a channel estimation between the user n and the transmitting end device; $[\bullet]_k$ represents a $k^{th}$ column of a matrix, and $[\bullet]^H$ represents conjugate transpose of a matrix.

Example 1

This example describes a method for selecting a user set in a multi-cell cooperative communication scenario, and a method for computing a precoding vector for each scheduled user according to the selected user set, respectively.

In the multi-cell cooperative communication scenario, according to cells to which all scheduled users on a time frequency resource block belong respectively, a partial interference suppression selecting module takes users in part of the cells as a user set of the scheduled users on the time frequency resource block. Specifically, for a user participating in the multi-cell cooperative communications, when the user is scheduled (for ease of description, indicated as a user n), according to the cells to which all scheduled users on a time frequency resource block corresponding to the user n belong, respectively, a user in part of cells (which may be one cell, and may also be a plurality of cells) is taken as a member of the user set of the user n.

In a precoding module, for a scheduled user in the selected user set, a precoding vector is: a corresponding column vector of a pseudo inverse matrix of a channel estimation matrix of users within a cell in which the scheduled user locates, and reference may be made to the equation (1) for the details;

For a scheduled user of other cells (i.e. a scheduled user outside the user set), a precoding vector is: a first column vector of a pseudo inverse matrix of a matrix of the channel estimation of the scheduled user and the channel estimations of users in the user set, thereby suppressing interference to the users in the user set, and reference may be made to the equation (2) for details.

The embodiment of the present invention may significantly reduce computation complexity of acquiring a precoding vector. In a situation where the number of antennas at a transmitting end device is M, the number of users is K, and the number of users in the user set used for partial interference suppression is $n_c$, if the embodiment 1 above is used, then computation complexity of the precoding vector is:

$$K\log_2 K + 3Mn_c^2/2 + n_c^3 + (K-n_c)(M(n_c+1)^2/2 + M(n_c+1) + (n_c+1)^3);$$

If the embodiment 2 above is used, then computation complexity of the precoding vector is:

$$MK^2/2 + K((K-1)\log_2(K-1) + M(n_c+1)^2/2 + M(n_c+1) + (n_c+1)^3);$$

Computation complexity of the existing ZF precoding algorithm is $3MK^2/2 + K^3$.

Table 1 shows a reduced rate of complexity for different $n_c$, compared with the existing ZF precoding algorithm.

Table 1: Precoding Complexity Comparison

| M=1000, K=48 | $n_c=6$ (complexity-the number of times of complex multiplication) | $n_c=4$ (complexity-the number of times of complex multiplication) |
|---|---|---|
| ZF | 3566592 | 3566592 |
| Embodiment 1 | 1391622 (-61%) | 799564(-77.6%) |
| Embodiment 2 | 2692995 (-24.5%) | 2010531(-43.6%) |

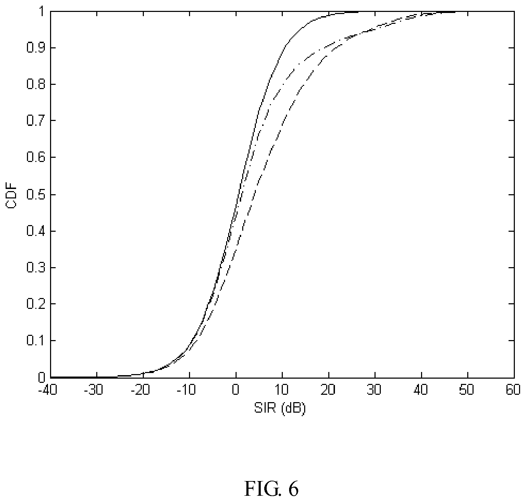

In addition, embodiments of the present invention compare CDF (Cumulative Distribution Function, cumulative distribution function) of SIR (Signal to Interference Ratio, signal to interference ratio) in a large-scale antenna system. FIG. 6 provides a system performance chart when K=48, M=1000, $n_c=6$, where the solid line represents an MF precoding method, the dashed line represents a ZF precoding method, and the dot-dashed line represents an example of a precoding method provided in embodiment 2 of the present invention. It can be seen from FIG. 6 that, a performance gap between the precoding method provided in embodiments of the present invention and the ZF precoding method is within 3 dB, i.e. a spectral efficiency loss of 1 bps/Hz at most, thus performance loss is relatively small.

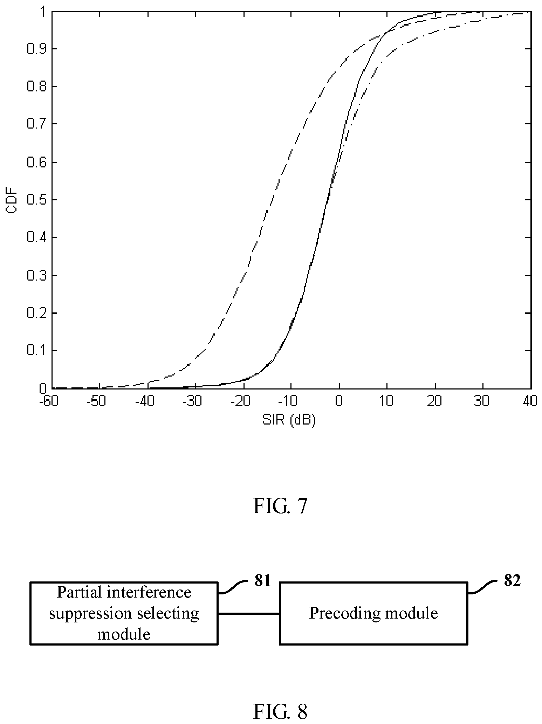

Moreover, FIG. 7 provides system performance when the number of users is close to the number of antennas. In the figure, M=K=500, $n_c=6$. It can be seen from the figure that, the precoding method provided in embodiments of the present invention may achieve better performance than the MF precoding method and the ZF precoding method.

In conclusion, complexity of the precoding scheme provided in embodiments of the present invention is reduced greatly compared with the ZF precoding method, meanwhile the loss of performance of the embodiments of the present invention is relatively small compared with the ZF, and precoding vector computation complexity and performance thereof may lie between the ZF precoding method and the MF precoding method, and in some scenarios, the solution provided in the embodiments of the present invention is better than the ZF precoding method and the MF precoding method.

Based on a same technical consideration, an embodiment of the present invention also provides a precoding device and a signal transmitting device.

Reference may be made to FIG. 8, which is a schematic structural diagram of a precoding device according to an embodiment of the present invention, and the precoding device may include: a partial interference suppression selecting module 81 and a precoding module 82.

The partial interference suppression selecting module 81 is configured to acquire all scheduled users on a resource block, and select, within a range of all the scheduled users on the resource block, a user set used for partial interference suppression for each scheduled user on the resource block;

The precoding module 82 is configured to, for each scheduled user on the resource block, compute a precoding vector for a current scheduled user according to a matrix formed by channel estimations of all users in the user set used for the partial interference suppression that is corresponding to the current scheduled user and selected by the partial interference suppression selecting module, and precode data of the scheduled user according to the computed precoding vector.

Specifically, the partial interference suppression selecting module 81 may select, according to distances between the scheduled users on the resource block and a transmitting end device, the user set used for the partial interference suppression for each scheduled user on the resource block, within the range of all the scheduled users on the resource block; or select, according to channel coherence between the scheduled users on the resource block, the user set used for the partial interference suppression for each scheduled user on the resource block, within the range of all the scheduled users on the resource block; or in a situation where the scheduled users perform multi-cell cooperative communications, according to cells to which all scheduled users on a time frequency resource block belong respectively, take users in part of the cells as a user set used for partial interference suppression of the scheduled users on the time frequency resource block.

The partial interference suppression selecting module 81 may determine the distance between each scheduled user on the resource block and the transmitting end device; according to the distances between the scheduled users on the resource block and the transmitting end device, select a set number of scheduled users therefrom in a near to far order, and determine the set number of selected scheduled users as the user set used for the partial interference suppression corresponding to each scheduled user on the resource block.

Specifically, the precoding module 82 may compute, according to the distances between the scheduled users on the resource block and the transmitting end device, the precoding vector for each scheduled user on the resource block, which is:

if the current scheduled user is a user in the user set used for the partial interference suppression, then the precoding vector of the current scheduled user is:

$$ V_k = \left[ H_{cluster}^H ( H_{cluster} H_{cluster}^H )^{-1} \right]_k $$

if the current scheduled user is a user out of the user set used for the partial interference suppression, then the precoding vector of the current scheduled user is:

$$ V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1 $$

$V_k$ represents a precoding vector of a user k in the user set, $V_n$ represents a precoding vector of a user n out of the user set; $H_{cluster}$ represents the matrix formed by the channel estimations of all the users in the user set used for the partial interference suppression; $\hat{\underline{h}}_n$ represents a channel estimation between the user n and the transmitting end device, $H_{cluster}^H$ represents conjugate transpose of $H_{cluster}$, $[\bullet]_k$ represents a $k^{th}$ column of a matrix, and $[\bullet]^H$

represents conjugate transpose of a matrix.

Specifically, the partial interference suppression selecting module 81 is specifically configured to: determine the channel coherence between the scheduled users on the resource block; for each scheduled user on the resource block, according to channel coherence between the current scheduled user and other scheduled users, select a set number of scheduled users therefrom in a big to small order as the user set used for the partial interference suppression of the current scheduled user.

The precoding module 82 may compute, according to the channel coherence between the scheduled users on the resource block, the precoding vector for each scheduled user on the resource block, which is:

$$ V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1 $$

where $V_n$ represents a precoding vector of a user n, $n_c$ represents the number of users in the user set used for the partial interference suppression; $H_{cluster}$ represents the matrix formed by the channel estimations of all users in the user set

$$ H_{cluster} = \begin{bmatrix} \hat{h}_{\pi(1)} \\ \vdots \\ \hat{h}_{\pi(n_c)} \end{bmatrix}, $$

used for the partial interference suppression corresponding to the user n;                                                where $\pi$ represents a small to big sequence order of channel coherence between other users and the user n, and $\pi(1)$ represents a user having smallest channel coherence with the user n; $\hat{\underline{h}}_n$ represents a channel estimation between a user out of the user set used for the partial interference suppression and the transmitting end device, $H_{cluster}^H$ represents conjugate transpose of $H_{cluster}$, $[\bullet]_k$ represents a k$^{th}$ column of a matrix, and $[\bullet]^H$ represents conjugate transpose of a matrix.

Specifically, the precoding module 82 may be in the situation where the scheduled users perform multi-cell cooperative communications, if the current scheduled user is in the user set used for the partial interference suppression, then the precoding vector of the current scheduled user is: a corresponding column vector of a pseudo inverse matrix of a channel estimation matrix of users within a cell in which the scheduled user locates;

if the current scheduled user is out of the user set used for the partial interference suppression, then the precoding vector of the current scheduled user is: a first column vector of a pseudo inverse matrix of a matrix of the channel estimation of the current scheduled user and the channel estimations of the users in the user set.

The signal transmitting device provided in the embodiment of the present invention may include a precoding device described above, and a scheduling module, a channel information acquiring module, a data preprocessing module and a frequency domain processing module that are connected to the precoding device, and a transmitting module connected to the frequency domain processing module, reference may be made to FIG. 2 for its structure, where:

the scheduling module is configured to provide information of all scheduled users on a resource block to the precoding device;

the channel information acquiring module is configured to acquire channel estimation information of the users and provide the same to the precoding device;

the data preprocessing module is configured to preprocess data of the users and provide the same to the precoding device, for instance, to implement functions as shown in FIG. 2, such as data generation, FEC, modulation, and layer mapping;

the partial interference suppression selecting module is configured to select, according to all scheduled users on the resource block provided by the scheduling module, a user set used for partial interference suppression for each scheduled user on the resource block, within a range of all the scheduled users on the resource block;

the precoding module is configured to, for each scheduled user on the resource block, compute a precoding vector for a current scheduled user according to a matrix formed by channel estimations of all users in the user set used for the partial interference suppression that is corresponding to the current scheduled user and selected by the partial interference suppression selecting module, and precode the data of the scheduled users processed by the data preprocessing module according to the computed precoding vector;

the frequency domain processing module is configured to convert frequency domain data precoded by the precoding device to a time domain signal; and

the transmitting module is configured to transmit the time domain signal processed by the frequency domain processing module.

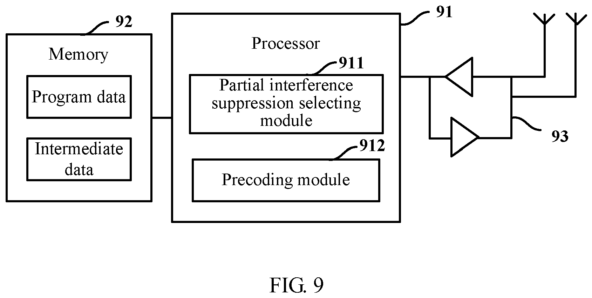

Reference may be made to FIG. 9, which is a schematic structural diagram of hardware of the signal transmitting device provided in the present invention above. As shown in the figure, the device may include: a processor 91, a memory 92 and a radio frequency module 93, where the processor 91 includes a partial interference suppression selecting module 911 and a precoding module 912.

The partial interference suppression selecting module 911 is configured to acquire all scheduled users on a resource block, and select, within a range of all the scheduled users on the resource block, a user set used for partial interference suppression for each scheduled user on the resource block; the precoding module 912 is configured to, for each scheduled user on the resource block, compute a precoding vector for a current scheduled user according to a matrix formed by channel estimations of all the users in the user set used for the partial interference suppression corresponding to the current scheduled user, and precode data of the scheduled users according to the computed precoding vector;

the memory 92 is configured to store program data according to which the processor 91 performs the above operations, and an intermediate parameter used or generated during a process where the processor 91 performs the above operations; and

the radio frequency module 93 is configured to transmit data processed by the processor.

Specifically, the partial interference suppression selecting module 911 may select, according to distances between the scheduled users on the resource block and a transmitting end device, the user set used for the partial interference suppression for each scheduled user on the resource block, within the range of all the scheduled users on the resource block; or select, according to channel coherence between the scheduled users on the resource block, the user set used for the partial interference suppression for each scheduled user on the resource block, within the range of all the scheduled users on the resource block; or in a situation where the scheduled users perform multi-cell cooperative communications, according to cells to which all scheduled users on a time frequency resource block belong respectively, take users in part of the cells as a user set used for partial interference suppression of the scheduled users on the time frequency resource block.

The partial interference suppression selecting module 911 is specifically configured to: determine a distance between each scheduled user on the resource block and the transmitting end device; according to the distance between each scheduled user on the resource block and the transmitting end device, select a set number of scheduled users therefrom in a near to far order; and determine the set number of selected scheduled users as the user set used for the partial interference suppression corresponding to each scheduled user on the resource block.

Specifically, the precoding module 912 may compute, according to the distance between each scheduled user on the resource block and the transmitting end device, the precoding vector for each scheduled user on the resource block, which is:

if the current scheduled user is a user in the user set used for the partial interference suppression, then the precoding vector of the current scheduled user is:

$$V_k = \left[ H_{cluster}^H \left( H_{cluster} H_{cluster}^H \right)^{-1} \right]_k$$

if the current scheduled user is a user out of the user set used for the partial interference suppression, then the precoding vector of the current scheduled user is:

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1$$

where $V_k$ represents a precoding vector of a user k in the user set, $V_n$ represents a precoding vector of a user n out of the user set; $H_{cluster}$ represents the matrix formed by the channel estimations of all the users in the user set used for the partial interference suppression; $\hat{\underline{h}}_n$ represents a channel estimation between the user n and the transmitting end device, $H_{cluster}^H$ represents conjugate transpose of $H_{cluster}$, $[\bullet]_k$ represents a $k^{th}$ column of a matrix, and $[\bullet]^H$ represents conjugate transpose of a matrix.

Specifically, the partial interference suppression selecting module 911 is specifically configured to: determine the channel coherence between the scheduled users on the resource block; for each scheduled user on the resource block, according to channel coherence between the current scheduled user and other scheduled users, select a set number of scheduled users therefrom in a big to small order as the user set used for the partial interference suppression of the current scheduled user.

Specifically, the precoding module 912 may compute, according to the channel coherence between the scheduled users on the resource block, the precoding vector for each scheduled user on the resource block, which is:

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1$$

where $V_n$ represents a precoding vector of a user n, $n_c$ represents the number of users in the user set used for the partial interference suppression; $H_{cluster}$ represents the matrix formed by the channel estimations of all the users in the user

$$H_{cluster} = \begin{bmatrix} \hat{h}_{\pi(1)} \\ \vdots \\ \hat{h}_{\pi(n_c)} \end{bmatrix},$$

set used for the partial interference suppression corresponding to the user n; where $\pi$ represents a small to big sequence order of channel coherence between other users and the user n, and $\pi(1)$ represents a user having smallest channel coherence with the user n; $\hat{\underline{h}}_n$ represents a channel estimation between a user out of the user set used for the partial interference suppression and the transmitting end device, $H_{cluster}^H$ represents conjugate transpose of $H_{cluster}$, $[\bullet]_k$ represents a $k^{th}$ column of a matrix, and $[\bullet]^H$ represents conjugate transpose of a matrix.

Specifically, the precoding module 912 is in the situation where the scheduled users perform the multi-cell cooperative communications, if the current scheduled user is in the user set used for the partial interference suppression, then the precoding vector of the current scheduled user is: a corresponding column vector of a pseudo inverse matrix of a channel estimation matrix of users within a cell in which the scheduled user locates;
if the current scheduled user is out of the user set used for the partial interference suppression, then the precoding vector of the current scheduled user is: a first column vector of a pseudo inverse matrix of a matrix of the channel estimation of the current scheduled user and the channel estimations of the users in the user set.

The present invention is described with reference to flow charts and/or block diagrams of a method, a device (system) and a computer program product according to embodiments of the present invention. It will be appreciated that computer program instructions can implement each flow and/or block in the flow charts and/or the block diagrams, and a combination of a flow and/or a block in the flow charts and/or the block diagrams. These computer program instructions may be provided to a processor of a general purpose computer, a special purpose computer, an embedded processor or other programmable data processing devices to generate a machine, so that instructions executed by the processor of the computers or other programmable data processing devices generate a device for implementing functions specified in one or more flows of the flow charts and/or one or more blocks of the block diagrams.

These computer program instructions may also be stored in a computer readable memory capable of directing the computers or other programmable data processing devices to operate in a specific manner, so that instructions stored in the computer readable memory generate a manufacture product including an instruction device, where the instruction device performs functions specified in one or more flows of the flow charts and/or one or more blocks of the block diagrams.

These computer program instructions may also be loaded on the computers or other programmable data processing devices, so that a series of operation steps are performed in the computers or other programmable devices to generate a computer implemented process, and thus the instructions executed on the computers or other programmable devices provide steps for implementing the functions specified in one or more flows of the flow charts and/or one or more blocks of the block diagrams.

Although preferred embodiments of the present invention have been described, those skilled in the art can make additional variations and modifications to these embodiments once having knowledge of basic inventive concepts. Thus, the appended claims are interpreted as all variations and modifications including the preferred embodiments and falling into the scope of the present invention.

Obviously, those skilled in the art can make various modifications and variations to the present invention without departing from the scope of the present invention. Thus, if these modifications and variations of the present invention fall into the scope of the claims of the present invention, then the present invention is also intended for including these modifications and variations.

**Claims**

1. A precoding method in wireless communication, comprising:

    acquiring all scheduled users on a resource block of Orthogonal Frequency Division Multiplexing, OFDM, system, and selecting, within a range of all the scheduled users on the resource block, a user set used for partial interference suppression for each scheduled user on the resource block; and
    computing a precoding vector for each scheduled user according to a matrix formed by channel estimations of all users in the user set used for the partial interference suppression corresponding to each scheduled user, and precoding data of each scheduled user according to the computed precoding vector for each scheduled user; **characterized in that** the selecting, within a range of all the scheduled users on the resource block, a user set used for partial interference suppression for each scheduled user on the resource block specifically comprises:
    selecting, according to distances between the scheduled users on the resource block and a transmitting end device, within the range of all the scheduled users on the resource block, the user set used for the partial interference suppression for each scheduled user on the resource block; or
    selecting, according to channel coherence between the scheduled users on the resource block, within the range of all the scheduled users on the resource block, the user set used for the partial interference suppression for each scheduled user on the resource block.

2. The method according to claim 1, wherein the selecting, according to the distance between each scheduled user on the resource block and the transmitting end device, within the range of all the scheduled users on the resource block, the user set used for the partial interference suppression for each scheduled user on the resource block specifically comprises:

    determining a distance between each scheduled user on the resource block and the transmitting end device;
    according to the distance between each scheduled user on the resource block and the transmitting end device, selecting a set number of scheduled users therefrom in a near to far order; and
    determining the set number of selected scheduled users as the user set used for the partial interference suppression corresponding to each scheduled user on the resource block.

3. The method according to claim 1 or 2, wherein, according to the distances between the scheduling users on the resource block and the transmitting end device, the precoding vector computed for each scheduled user on the resource block is:

    if the scheduled user is a user in the user set used for the partial interference suppression, then the precoding vector of the scheduled user is:

$$V_k = \left[ H_{cluster}^H \left( H_{cluster} H_{cluster}^H \right)^{-1} \right]_k$$

if the scheduled user is a user out of the user set used for the partial interference suppression, then the precoding vector of the scheduled user is:

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1$$

wherein $V_k$ represents a precoding vector of a user k in the user set, $V_n$ represents a precoding vector of a user n out of the user set; $H_{cluster}$ represents the matrix formed by the channel estimations of all the users in the user set used for the partial interference suppression; $\hat{h}_n$ represents a channel estimation between the user n and the transmitting end device, $H_{cluster}^H$ represents conjugate transpose of $H_{cluster}$, $[\bullet]_k$ represents a k$^{th}$ column of a matrix, and $[\bullet]^H$ represents conjugate transpose of a matrix.

4. The method according to claim 1, wherein the selecting, according to channel coherence between the scheduled users on the resource block, within the range of all the scheduled users on the resource block, the user set used for the partial interference suppression for each scheduled user on the resource block specifically comprises:

   determining the channel coherence between the scheduled users on the resource block;
   for each scheduled user on the resource block, according to channel coherence between the scheduled user and other scheduled users, selecting a set number of scheduled users therefrom in a big to small order as the user set used for the partial interference suppression of the scheduled user.

5. The method according to claim 4, wherein, according to the channel coherence between the scheduled users on the resource block, the precoding vector computed for each scheduled user on the resource block is:

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1$$

wherein $V_n$ represents a precoding vector of a user n, $n_c$ represents a number of the users in the user set used for the partial interference suppression; $H_{cluster}$ represents the matrix formed by the channel estimations of all the users

$$H_{cluster} = \begin{bmatrix} \hat{\underline{h}}_{\pi(1)} \\ \vdots \\ \hat{\underline{h}}_{\pi(n_c)} \end{bmatrix},$$

in the user set used for the partial interference suppression corresponding to the user n;
wherein $\pi$ represents a small to big sequence order of channel coherence between other users and the user n, and

$\pi(1)$ represents a user having smallest channel coherence with the user n; $\hat{\underline{h}}_n$ represents a channel estimation between a user out of the user set used for the partial interference suppression and the transmitting end device,

$H_{cluster}^{H}$ represents conjugate transpose of $H_{cluster}$, $[\bullet]_k$ represents a kth column of a matrix, and $[\bullet]^H$ represents a conjugate transpose of a matrix.

6. A precoding device in wireless communication, comprising:

a partial interference suppression selecting module, configured to acquire all scheduled users on a resource block of Orthogonal Frequency Division Multiplexing, OFDM, system, and select, within a range of all the scheduled users on the resource block, a user set used for partial interference suppression for each scheduled user on the resource block; and
a precoding module, configured to compute a precoding vector for each scheduled user according to a matrix formed by channel estimations of all users in the user set used for the partial interference suppression that is corresponding to each scheduled user and selected by the partial interference suppression selecting module, and precode data of each scheduled user according to the computed precoding vector for each scheduled user; **characterized in that** the partial interference suppression selecting module is specifically configured to: select, according to distances between the scheduled users on the resource block and a transmitting end device, within the range of all the scheduled users on the resource block, the user set used for the partial interference suppression for each scheduled user on the resource block; or
select, according to channel coherence between the scheduled users on the resource block, within the range of all the scheduled users on the resource block, the user set used for the partial interference suppression for each scheduled user on the resource block.

7. The device according to claim 6, wherein the partial interference suppression selecting module is specifically configured to: determine a distance between each scheduled user on the resource block and the transmitting end device; according to the distance between each scheduled user on the resource block and the transmitting end device, select a set number of scheduled users therefrom in a near to far order; and determine the set number of selected scheduled users as the user set used for the partial interference suppression corresponding to each scheduled user on the resource block.

8. The device according to claim 6 or 7, wherein the precoding module being specifically configured to: according to the distances between the scheduled users on the resource block and the transmitting end device, the precoding vector computed for each scheduled user on the resource block, is:

if the scheduled user is a user in the user set used for the partial interference suppression, then the precoding vector of the scheduled user is:

$$V_k = \left[ H_{cluster}^{H} (H_{cluster} H_{cluster}^{H})^{-1} \right]_k$$

if the scheduled user is a user out of the user set used for the partial interference suppression, then the precoding vector of the scheduled user is:

$$V_n = \left[ \begin{bmatrix} \hat{\underline{h}}_n \\ H_{cluster} \end{bmatrix}^{H} \left( \begin{bmatrix} \hat{\underline{h}}_n \\ H_{cluster} \end{bmatrix} \begin{bmatrix} \hat{\underline{h}}_n \\ H_{cluster} \end{bmatrix}^{H} \right)^{-1} \right]_1$$

wherein, $V_k$ represents a precoding vector of a user k in the user set, $V_n$ represents a precoding vector of a user n out of the user set; $H_{cluster}$ represents the matrix formed by the channel estimations of all the users in the user set used for the partial interference suppression; $\hat{\underline{h}}_n$ represents a channel estimation between the user n and the transmitting end device, $H_{cluster}^{H}$ represents conjugate transpose of $H_{cluster}$, $[\bullet]_k$ represents a kth column of a matrix, and $[\bullet]^H$ represents conjugate transpose of a matrix.

9. The device according to claim 6, wherein the partial interference suppression selecting module is specifically configured to: determine the channel coherence between the scheduled users on the resource block; for each scheduled user on the resource block, according to channel coherence between a scheduled user and other scheduled users, select a set number of scheduled users therefrom in a big to small order as the user set used for the partial interference suppression of the scheduled user.

10. The device according to claim 9, wherein the precoding module is specifically configured to: according to the channel coherence between the scheduled users on the resource block, the precoding vector computed for each scheduled user on the resource block is:

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1$$

wherein $V_n$ represents a precoding vector of a user n, $n_c$ represents the number of users in the user set used for the partial interference suppression; $H_{cluster}$ represents the matrix formed by the channel estimations of all the users

$$H_{cluster} = \begin{bmatrix} \hat{h}_{\pi(1)} \\ \vdots \\ \hat{h}_{\pi(n_c)} \end{bmatrix},$$

in the user set used for the partial interference suppression corresponding to the user n;
where $\pi$ represents a small to big sequence order of channel coherence between other users and the user n, and

$\pi(1)$ represents a user having smallest channel coherence with the user n; $\hat{\underline{h}}_n$ represents a channel estimation between a user out of the user set used for the partial interference suppression and the transmitting end device, $H_{cluster}^H$ represents conjugate transpose of $H_{cluster}$, $[\bullet]_k$ represents a $k^{th}$ column of a matrix, and $[\bullet]^H$ represents conjugate transpose of a matrix.

11. A signal transmitting device, comprising a precoding device in wireless communication according to any one of claims 6-10, and a scheduling module, a channel information acquiring module, a data preprocessing module and a frequency domain processing module which are connected to the precoding device, and a transmitting module connected to the frequency domain processing module, wherein:

the scheduling module is configured to provide information of all scheduled users on a resource block of Orthogonal Frequency Division Multiplexing, OFDM, system to the precoding device;
the channel information acquiring module is configured to acquire channel estimation information of the users and provide same to the precoding device;
the data preprocessing module is configured to preprocess data of the users and provide same to the precoding device;
the frequency domain processing module is configured to convert frequency domain data precoded by the precoding device to a time domain signal; and
the transmitting module is configured to transmit the time domain signal processed by the frequency domain processing module.

**Patentansprüche**

1. Präcodierverfahren in drahtloser Kommunikation, die folgenden Schritte umfassend:

Erfassen aller eingeplanten Benutzer auf einem Ressourcenblock eines orthogonalen Frequenzmultiplexsystems bzw. OFDM-Systems und Auswählen, innerhalb eines Bereichs von all den eingeplanten Benutzern auf dem Ressourcenblock, eines für partielle Störunterdrückung verwendeten Benutzersatzes für jeden eingeplanten Benutzer auf dem Ressourcenblock; und

Berechnen eines Präcodiervektors für jeden eingeplanten Benutzer gemäß einer Matrix, die durch Kanalschätzungen von allen Benutzern in dem für die partielle Störunterdrückung verwendeten Benutzersatz jedem eingeplanten Benutzer entsprechend ausgebildet wird, und Präcodieren von Daten von jedem eingeplanten Benutzer gemäß dem berechneten Präcodiervektor für jeden eingeplanten Benutzer;

**dadurch gekennzeichnet, dass**

das Auswählen, innerhalb eines Bereichs von all den eingeplanten Benutzern auf dem Ressourcenblock, eines für partielle Störunterdrückung verwendeten Benutzersatzes für jeden eingeplanten Benutzer auf dem Ressourcenblock insbesondere umfasst:

Auswählen, gemäß Entfernungen zwischen den eingeplanten Benutzern auf dem Ressourcenblock und einem sendenden Endgerät, innerhalb des Bereichs von all den eingeplanten Benutzern auf dem Ressourcenblock, des für die partielle Störunterdrückung verwendeten Benutzersatzes für jeden eingeplanten Benutzer auf dem Ressourcenblock; oder

Auswählen, gemäß Kanalkohärenz zwischen den eingeplanten Benutzern auf dem Ressourcenblock, innerhalb des Bereichs von all den eingeplanten Benutzern auf dem Ressourcenblock, des für die partielle Störunterdrückung verwendeten Benutzersatzes für jeden eingeplanten Benutzer auf dem Ressourcenblock.

2. Verfahren nach Anspruch 1, wobei das Auswählen, gemäß der Entfernung zwischen jedem eingeplanten Benutzer auf dem Ressourcenblock und dem sendenden Endgerät, innerhalb des Bereichs von all den eingeplanten Benutzern auf dem Ressourcenblock, des für die partielle Störunterdrückung verwendeten Benutzersatzes für jeden eingeplanten Benutzer auf dem Ressourcenblock insbesondere die folgenden Schritte umfasst:

Bestimmen einer Entfernung zwischen jedem eingeplanten Benutzer auf dem Ressourcenblock und dem sendenden Endgerät;

gemäß der Entfernung zwischen jedem eingeplanten Benutzer auf dem Ressourcenblock und dem sendenden Endgerät, Auswählen einer Satzanzahl von eingeplanten Benutzern davon in einer Reihenfolge von nah bis fern; und

Bestimmen der Satzanzahl von ausgewählten eingeplanten Benutzern als den für die partielle Störunterdrückung verwendeten Benutzersatz jedem eingeplanten Benutzer auf dem Ressourcenblock entsprechend.

3. Verfahren nach Anspruch 1 oder 2, wobei sich, gemäß den Entfernungen zwischen den einplanenden Benutzern auf dem Ressourcenblock und dem sendenden Endgerät, der für jeden eingeplanten Benutzer auf dem Ressourcenblock berechnete Präcodiervektor folgendermaßen ergibt:

wenn der eingeplante Benutzer ein Benutzer in dem für die partielle Störunterdrückung verwendeten Benutzersatz ist, dann lautet der Präcodiervektor des eingeplanten Benutzers folgendermaßen:

$$V_k = \left[ H_{cluster}^H \left( H_{cluster} H_{cluster}^H \right)^{-1} \right]_k$$

wenn der eingeplante Benutzer ein Benutzer außerhalb des für die partielle Störunterdrückung verwendeten Benutzersatzes ist, dann lautet der Präcodiervektor des eingeplanten Benutzers folgendermaßen:

$$V_n = \left[ \left[ \begin{array}{c} \underline{\hat{h}}_n \\ H_{cluster} \end{array} \right]^H \left( \left[ \begin{array}{c} \underline{\hat{h}}_n \\ H_{cluster} \end{array} \right] \left[ \begin{array}{c} \underline{\hat{h}}_n \\ H_{cluster} \end{array} \right]^H \right)^{-1} \right]_1$$

wobei $V_k$ einen Präcodiervektor eines Benutzers k in dem Benutzersatz repräsentiert, $V_n$ einen Präcodiervektor eines Benutzers n außerhalb des Benutzersatzes repräsentiert; $H_{cluster}$ die durch die Kanalschätzungen von all den Benutzern in dem für die partielle Störunterdrückung verwendeten Benutzersatz ausgebildete Matrix repräsentiert;

$\underline{\hat{h}}_n$ eine Kanalschätzung zwischen dem Benutzer n und dem sendenden Endgerät repräsentiert, $H_{cluster}^H$ die transponierte Konjugierte von $H_{cluster}$ repräsentiert, $[\bullet]_k$ eine k-te Spalte einer Matrix repräsentiert und $[\bullet]^H$ eine transponierte Konjugierte einer Matrix repräsentiert.

4. Verfahren nach Anspruch 1, wobei das Auswählen, gemäß Kanalkohärenz zwischen den eingeplanten Benutzern auf dem Ressourcenblock, innerhalb des Bereichs von all den eingeplanten Benutzern auf dem Ressourcenblock, des für die partielle Störunterdrückung verwendeten Benutzersatzes für jeden eingeplanten Benutzer auf dem Ressourcenblock insbesondere die folgenden Schritte umfasst:

Bestimmen der Kanalkohärenz zwischen den eingeplanten Benutzern auf dem Ressourcenblock;
für jeden eingeplanten Benutzer auf dem Ressourcenblock, gemäß Kanalkohärenz zwischen dem eingeplanten Benutzer und anderen eingeplanten Benutzern, Auswählen einer Satzanzahl von eingeplanten Benutzern davon in einer Reihenfolge von groß zu klein als den für die partielle Störunterdrückung verwendeten Benutzersatz des eingeplanten Benutzers.

5. Verfahren nach Anspruch 4, wobei sich, gemäß der Kanalkohärenz zwischen den eingeplanten Benutzern auf dem Ressourcenblock, der für jeden eingeplanten Benutzer auf dem Ressourcenblock berechnete Präcodiervektor folgendermaßen ergibt:

$$V_n = \left[ \begin{bmatrix} \underline{\hat{h}}_n \\ H_{cluster} \end{bmatrix}^H \left( \begin{bmatrix} \underline{\hat{h}}_n \\ H_{cluster} \end{bmatrix} \begin{bmatrix} \underline{\hat{h}}_n \\ H_{cluster} \end{bmatrix}^H \right)^{-1} \right]_1$$

wobei $V_n$ einen Präcodiervektor eines Benutzers n repräsentiert; $n_c$ eine Anzahl der Benutzer in dem für die partielle Störunterdrückung verwendeten Benutzersatz ist; $H_{cluster}$ die durch die Kanalschätzungen von all den Benutzern in dem für die partielle Störunterdrückung verwendeten Benutzersatz dem Benutzer n entsprechend ausgebildete Matrix repräsentiert;

$$H_{cluster} = \begin{bmatrix} \hat{h}_{\pi(1)} \\ \vdots \\ \hat{h}_{\pi(n_c)} \end{bmatrix}$$

wobei $\pi$ eine Reihenfolge klein nach groß von Kanalkohärenz zwischen anderen Benutzern und dem Benutzer n repräsentiert und $\pi(1)$ einen Benutzer mit einer kleinsten Kanalkohärenz mit dem Benutzer n repräsentiert; $\underline{\hat{h}}_n$ eine Kanalschätzung zwischen einem Benutzer außerhalb des für die partielle Störunterdrückung verwendeten Benutzersatzes und dem sendenden Endgerät repräsentiert, $H_{cluster}^H$ die transponierte Konjugierte von $H_{cluster}$ repräsentiert, $[\bullet]_k$ eine k-te Spalte einer Matrix repräsentiert und $[\bullet]^H$ eine transponierte Konjugierte einer Matrix repräsentiert.

6. Präcodiervorrichtung in drahtloser Kommunikation, Folgendes umfassend:

ein Partialstörungsunterdrückungsauswahlmodul, das ausgelegt ist zum Erfassen aller eingeplanten Benutzer auf einem Ressourcenblock eines orthogonalen Frequenzmultiplexsystems bzw. OFDM-Systems und Auswählen, innerhalb eines Bereichs von all den eingeplanten Benutzern auf dem Ressourcenblock, eines für partielle Störunterdrückung verwendeten Benutzersatzes für jeden eingeplanten Benutzer auf dem Ressourcenblock; und
ein Präcodiermodul, das ausgelegt ist zum Berechnen eines Präcodiervektors für jeden eingeplanten Benutzer gemäß einer Matrix, die durch Kanalschätzungen von allen Benutzern in dem für die partielle Störunterdrückung verwendeten Benutzersatz, die jedem eingeplanten Benutzer entspricht und durch das Partialstörungsunterdrückungsauswahlmodul ausgewählt ist, ausgebildet wird, und Präcodieren von Daten von jedem eingeplanten Benutzer gemäß dem berechneten Präcodiervektor für jeden eingeplanten Benutzer;
**dadurch gekennzeichnet, dass**
das Partialstörungsunterdrückungsauswahlmodul insbesondere ausgelegt ist zum:

Auswählen, gemäß Entfernungen zwischen den eingeplanten Benutzern auf dem Ressourcenblock und einem sendenden Endgerät, innerhalb des Bereichs von all den eingeplanten Benutzern auf dem Ressourcenblock, des für die partielle Störunterdrückung verwendeten Benutzersatzes für jeden eingeplanten Benutzer auf dem Ressourcenblock; oder

Auswählen, gemäß Kanalkohärenz zwischen den eingeplanten Benutzern auf dem Ressourcenblock, innerhalb des Bereichs von all den eingeplanten Benutzern auf dem Ressourcenblock, des für die partielle Störunterdrückung verwendeten Benutzersatzes für jeden eingeplanten Benutzer auf dem Ressourcenblock.

7. Vorrichtung nach Anspruch 6, wobei das Partialstörungsunterdrückungsauswahlmodul insbesondere ausgelegt ist zum: Bestimmen einer Entfernung zwischen jedem eingeplanten Benutzer auf dem Ressourcenblock und dem sendenden Endgerät; gemäß der Entfernung zwischen jedem eingeplanten Benutzer auf dem Ressourcenblock und dem sendenden Endgerät, Auswählen einer Satzanzahl von eingeplanten Benutzern davon in einer Reihenfolge von nah bis fern; und Bestimmen der Satzanzahl von ausgewählten eingeplanten Benutzern als den für die partielle Störunterdrückung verwendeten Benutzersatz jedem eingeplanten Benutzer auf dem Ressourcenblock entsprechend.

8. Vorrichtung nach Anspruch 6 oder 7, wobei das Präcodiermodul insbesondere ausgelegt ist zum: gemäß den Entfernungen zwischen den eingeplanten Benutzern auf dem Ressourcenblock und dem sendenden Endgerät, ergibt sich der für jeden eingeplanten Benutzer auf dem Ressourcenblock berechnete Präcodiervektor folgendermaßen:

wenn der eingeplante Benutzer ein Benutzer in dem für die partielle Störunterdrückung verwendeten Benutzersatz ist, dann lautet der Präcodiervektor des eingeplanten Benutzers folgendermaßen:

$$V_k = \left[ H_{cluster}^H \left( H_{cluster} H_{cluster}^H \right)^{-1} \right]_k$$

wenn der eingeplante Benutzer ein Benutzer außerhalb des für die partielle Störunterdrückung verwendeten Benutzersatzes ist, dann lautet der Präcodiervektor des eingeplanten Benutzers folgendermaßen:

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1$$

wobei $V_k$ einen Präcodiervektor eines Benutzers k in dem Benutzersatz repräsentiert, $V_n$ einen Präcodiervektor eines Benutzers n außerhalb des Benutzersatzes repräsentiert; $H_{cluster}$ die durch die Kanalschätzungen von all den Benutzern in dem für die partielle Störunterdrückung verwendeten Benutzersatz ausgebildete Matrix repräsentiert;

$\hat{\underline{h}}_n$ eine Kanalschätzung zwischen dem Benutzer n und dem sendenden Endgerät repräsentiert, $H_{cluster}^H$ die transponierte Konjugierte von $H_{cluster}$ repräsentiert, $[\bullet]_k$ eine k-te Spalte einer Matrix repräsentiert und $[\bullet]^H$ eine transponierte Konjugierte einer Matrix repräsentiert.

9. Vorrichtung nach Anspruch 6, wobei das Partialstörungsunterdrückungsauswahlmodul insbesondere ausgelegt ist zum: Bestimmen der Kanalkohärenz zwischen den eingeplanten Benutzern auf dem Ressourcenblock; für jeden eingeplanten Benutzer auf dem Ressourcenblock, gemäß Kanalkohärenz zwischen einem eingeplanten Benutzer und anderen eingeplanten Benutzern, Auswählen einer Satzanzahl von eingeplanten Benutzern davon in einer Reihenfolge von groß nach klein als den für die partielle Störunterdrückung verwendeten Benutzersatz des eingeplanten Benutzers.

10. Vorrichtung nach Anspruch 9, wobei das Präcodiermodul insbesondere ausgelegt ist zum:

gemäß der Kanalkohärenz zwischen den eingeplanten Benutzern auf dem Ressourcenblock, ergibt sich der für jeden eingeplanten Benutzer auf dem Ressourcenblock berechnete Präcodiervektor folgendermaßen:

$$V_n = \left[ \begin{bmatrix} \underline{\hat{h}_n} \\ H_{cluster} \end{bmatrix}^H \left( \begin{bmatrix} \underline{\hat{h}_n} \\ H_{cluster} \end{bmatrix} \begin{bmatrix} \underline{\hat{h}_n} \\ H_{cluster} \end{bmatrix}^H \right)^{-1} \right]_1$$

wobei $V_n$ einen Präcodiervektor eines Benutzers n repräsentiert; $n_c$ die Anzahl der Benutzer in dem für die partielle Störunterdrückung verwendeten Benutzersatz ist; $H_{cluster}$ die durch die Kanalschätzungen von all den Benutzern in dem für die partielle Störunterdrückung verwendeten Benutzersatz dem Benutzer n entsprechend ausgebildete Matrix repräsentiert;

$$H_{cluster} = \begin{bmatrix} \hat{h}_{\pi(1)} \\ \vdots \\ \hat{h}_{\pi(n_c)} \end{bmatrix}$$

wobei $\pi$ eine Reihenfolge klein nach groß von Kanalkohärenz zwischen anderen Benutzern und dem Benutzer n repräsentiert und $\pi(1)$ einen Benutzer mit einer kleinsten Kanalkohärenz mit dem Benutzer n repräsentiert; $\underline{\hat{h}_n}$ eine Kanalschätzung zwischen einem Benutzer außerhalb des für die partielle Störunterdrückung verwendeten Benutzersatzes und dem sendenden Endgerät repräsentiert, $H_{cluster}^H$ die transponierte Konjugierte von $H_{cluster}$ repräsentiert, $[\bullet]_k$ eine k-te Spalte einer Matrix repräsentiert und $[\bullet]^H$ eine transponierte Konjugierte einer Matrix repräsentiert.

11. Signalsendevorrichtung, umfassend eine Präcodiervorrichtung in drahtloser Kommunikation gemäß einem der Ansprüche 6-10 und ein Planungsmodul, ein Kanalinformationserfassungsmodul, ein Datenvorverarbeitungsmodul und ein Frequenzdomänenverarbeitungsmodul, welche mit der Präcodiervorrichtung verbunden sind, und ein mit dem Frequenzdomänenverarbeitungsmodul verbundenes Sendemodul, wobei:

    das Planungsmodul ausgelegt ist zum Bereitstellen von Informationen von allen geplanten Benutzern auf einem Ressourcenblock eines orthogonalen Frequenzmultiplex-Systems bzw. OFDM-Systems für die Präcodiervorrichtung;
    das Kanalinformationserfassungsmodul ausgelegt ist zum Erfassen von Kanalschätzinformationen der Benutzer und Bereitstellen derselben für die Präcodiervorrichtung;
    das Datenvorverarbeitungsmodul ausgelegt ist zum Vorverarbeiten von Daten der Benutzer und zum Bereitstellen derselben für die Präcodiervorrichtung;
    das Frequenzdomänenverarbeitungsmodul ausgelegt ist zum Umwandeln von durch die Präcodiervorrichtung präcodierten Frequenzdomänendaten in ein Zeitdomänensignal; und
    das Sendemodul ausgelegt ist zum Senden des durch das Frequenzdomänenverarbeitungsmodul verarbeiteten Zeitdomänensignals.

## Revendications

1. Procédé de précodage dans une communication sans fil, le procédé comprenant les étapes suivantes :

    acquisition de tous les utilisateurs ordonnancés sur un bloc de ressources d'un système de multiplexage par répartition orthogonale en fréquence, noté OFDM, et sélection, au sein d'une étendue de tous les utilisateurs ordonnancés sur le bloc de ressources, d'un ensemble d'utilisateurs utilisé pour une suppression partielle d'interférences pour chaque utilisateur ordonnancé sur le bloc de ressources ; et
    calcul d'un vecteur de précodage pour chaque utilisateur ordonnancé selon une matrice formée d'estimations de canal de tous les utilisateurs dans l'ensemble d'utilisateurs utilisé pour la suppression partielle d'interférences correspondant à chaque utilisateur ordonnancé, et précodage de données de chaque utilisateur ordonnancé selon le vecteur de précodage calculé pour chaque utilisateur ordonnancé ;

le procédé étant **caractérisé en ce que**

l'étape de sélection, au sein d'une étendue de tous les utilisateurs ordonnancés sur le bloc de ressources, d'un ensemble d'utilisateurs utilisé pour une suppression partielle d'interférences pour chaque utilisateur ordonnancé sur le bloc de ressources comprend plus particulièrement les étapes suivantes :

sélection, selon des distances entre les utilisateurs ordonnancés sur le bloc de ressources et un dispositif d'extrémité émission, au sein de l'étendue de tous les utilisateurs ordonnancés sur le bloc de ressources, de l'ensemble d'utilisateurs utilisé pour la suppression partielle d'interférences pour chaque utilisateur ordonnancé sur le bloc de ressources ; ou

sélection, selon une cohérence de canal entre les utilisateurs ordonnancés sur le bloc de ressources, au sein de l'étendue de tous les utilisateurs ordonnancés sur le bloc de ressources, de l'ensemble d'utilisateurs utilisé pour la suppression partielle d'interférences pour chaque utilisateur ordonnancé sur le bloc de ressources.

2. Procédé selon la revendication 1, dans lequel l'étape de sélection, selon la distance entre chaque utilisateur ordonnancé sur le bloc de ressources et le dispositif d'extrémité émission, au sein de l'étendue de tous les utilisateurs ordonnancés sur le bloc de ressources, de l'ensemble d'utilisateurs utilisé pour la suppression partielle d'interférences pour chaque utilisateur ordonnancé sur le bloc de ressources comprend plus particulièrement les étapes suivantes :

détermination d'une distance entre chaque utilisateur ordonnancé sur le bloc de ressources et le dispositif d'extrémité émission ;

selon la distance entre chaque utilisateur ordonnancé sur le bloc de ressources et le dispositif d'extrémité émission, sélection de là d'un nombre fixé d'utilisateurs ordonnancés par ordre de proche à distant ; et

détermination du nombre fixé d'utilisateurs ordonnancés sélectionnés comme l'ensemble d'utilisateurs utilisé pour la suppression partielle d'interférences correspondant à chaque utilisateur ordonnancé sur le bloc de ressources.

3. Procédé selon la revendication 1 ou 2, dans lequel, selon les distances entre les utilisateurs d'ordonnancement sur le bloc de ressources et le dispositif d'extrémité émission, le vecteur de précodage calculé pour chaque utilisateur ordonnancé sur le bloc de ressources s'établit comme suit :

si l'utilisateur ordonnancé est un utilisateur dans l'ensemble d'utilisateurs utilisé pour la suppression partielle d'interférences, le vecteur de précodage de l'utilisateur ordonnancé s'établit alors comme suit :

$$V_k = \left[ H_{cluster}^H \left( H_{cluster} H_{cluster}^H \right)^{-1} \right]_k$$

si l'utilisateur ordonnancé est un utilisateur hors de l'ensemble d'utilisateurs utilisé pour la suppression partielle d'interférences, le vecteur de précodage de l'utilisateur ordonnancé s'établit alors comme suit :

$$V_n = \left[ \left[ \begin{array}{c} \hat{\underline{h}}_n \\ H_{cluster} \end{array} \right]^H \left( \left[ \begin{array}{c} \hat{\underline{h}}_n \\ H_{cluster} \end{array} \right] \left[ \begin{array}{c} \hat{\underline{h}}_n \\ H_{cluster} \end{array} \right]^H \right)^{-1} \right]_1$$

où $V_k$ représente un vecteur de précodage d'un utilisateur k dans l'ensemble d'utilisateurs, $V_n$ représente un vecteur de précodage d'un utilisateur n hors de l'ensemble d'utilisateurs ; $H_{cluster}$ représente la matrice formée des estimations de canal de tous les utilisateurs dans l'ensemble d'utilisateurs utilisé pour la suppression partielle d'interférences ; $\hat{\underline{h}}_n$ représente une estimation de canal entre l'utilisateur n et le dispositif d'extrémité émission, $H_{cluster}^H$ représente une transposée conjuguée de $H_{cluster}$, $\lfloor \bullet \rfloor_k$ représente une k-ième colonne d'une matrice et $[\bullet]^H$ représente une transposée conjuguée d'une matrice.

**4.** Procédé selon la revendication 1, dans lequel l'étape de sélection, selon une cohérence de canal entre les utilisateurs ordonnancés sur le bloc de ressources, au sein de l'étendue de tous les utilisateurs ordonnancés sur le bloc de ressources, de l'ensemble d'utilisateurs utilisé pour la suppression partielle d'interférences pour chaque utilisateur ordonnancé sur le bloc de ressources comprend plus particulièrement les étapes suivantes :

détermination de la cohérence de canal entre les utilisateurs ordonnancés sur le bloc de ressources ;
pour chaque utilisateur ordonnancé sur le bloc de ressources, selon une cohérence de canal entre l'utilisateur ordonnancé et d'autres utilisateurs ordonnancés, sélection de là d'un nombre fixé d'utilisateurs ordonnancés par ordre de grand à petit comme l'ensemble d'utilisateurs utilisé pour la suppression partielle d'interférences de l'utilisateur ordonnancé.

**5.** Procédé selon la revendication 4, dans lequel, selon la cohérence de canal entre les utilisateurs ordonnancés sur le bloc de ressources, le vecteur de précodage calculé pour chaque utilisateur ordonnancé sur le bloc de ressources s'établit comme suit :

$$V_n = \left[ \begin{bmatrix} \hat{h}_n \\ H_{cluster} \end{bmatrix}^H \left( \begin{bmatrix} \hat{h}_n \\ H_{cluster} \end{bmatrix} \begin{bmatrix} \hat{h}_n \\ H_{cluster} \end{bmatrix}^H \right)^{-1} \right]_1$$

où $V_n$ représente un vecteur de précodage d'un utilisateur n, $n_c$ représente un nombre des utilisateurs dans l'ensemble d'utilisateurs utilisé pour la suppression partielle d'interférences ; $H_{cluster}$ représente la matrice formée des estimations de canal de tous les utilisateurs dans l'ensemble d'utilisateurs utilisé pour la suppression partielle

$$H_{cluster} = \begin{bmatrix} \hat{h}_{\pi(1)} \\ \vdots \\ \hat{h}_{\pi(n_c)} \end{bmatrix}$$

d'interférences correspondant à l'utilisateur n ; , où $\pi$ représente un ordre séquentiel de faible à grande d'une cohérence de canal entre d'autres utilisateurs et l'utilisateur n et $\pi(1)$ représente un utilisateur présentant la plus faible cohérence de canal avec l'utilisateur n ; $\hat{h}_n$ représente une estimation de canal entre un utilisateur hors de l'ensemble d'utilisateurs utilisé pour la suppression partielle d'interférences et le dispositif d'extrémité émission, $H_{cluster}^H$ représente une transposée conjuguée de $H_{cluster}$, $\lfloor \bullet \rfloor_k$ représente une k-ième colonne d'une matrice et $[\bullet]^H$ représente une transposée conjuguée d'une matrice.

**6.** Dispositif de précodage dans une communication sans fil, le dispositif comprenant :

un module de sélection de suppression partielle d'interférences, configuré pour acquérir tous les utilisateurs ordonnancés sur un bloc de ressources d'un système de multiplexage par répartition orthogonale en fréquence, noté OFDM, et sélectionner, au sein d'une étendue de tous les utilisateurs ordonnancés sur le bloc de ressources, un ensemble d'utilisateurs utilisé pour une suppression partielle d'interférences pour chaque utilisateur ordonnancé sur le bloc de ressources ; et
un module de précodage, configuré pour calculer un vecteur de précodage pour chaque utilisateur ordonnancé selon une matrice formée d'estimations de canal de tous les utilisateurs dans l'ensemble d'utilisateurs utilisé pour la suppression partielle d'interférences correspondant à chaque utilisateur ordonnancé et sélectionné par le module de sélection de suppression partielle d'interférences, et précoder des données de chaque utilisateur ordonnancé selon le vecteur de précodage calculé pour chaque utilisateur ordonnancé ;
le dispositif étant **caractérisé en ce que**
le module de sélection de suppression partielle d'interférences est plus particulièrement configuré pour :

sélectionner, selon des distances entre les utilisateurs ordonnancés sur le bloc de ressources et un dispositif d'extrémité émission, au sein de l'étendue de tous les utilisateurs ordonnancés sur le bloc de ressources, l'ensemble d'utilisateurs utilisé pour la suppression partielle d'interférences pour chaque utilisateur ordonnancé sur le bloc de ressources ; ou

sélectionner, selon une cohérence de canal entre les utilisateurs ordonnancés sur le bloc de ressources, au sein de l'étendue de tous les utilisateurs ordonnancés sur le bloc de ressources, l'ensemble d'utilisateurs utilisé pour la suppression partielle d'interférences pour chaque utilisateur ordonnancé sur le bloc de ressources.

**7.** Dispositif selon la revendication 6, dans lequel le module de sélection de suppression partielle d'interférences est plus particulièrement configuré pour : déterminer une distance entre chaque utilisateur ordonnancé sur le bloc de ressources et le dispositif d'extrémité émission ; selon la distance entre chaque utilisateur ordonnancé sur le bloc de ressources et le dispositif d'extrémité émission, sélectionner de là un nombre fixé d'utilisateurs ordonnancés par ordre de proche à distant ; et déterminer le nombre fixé d'utilisateurs ordonnancés sélectionnés comme l'ensemble d'utilisateurs utilisé pour la suppression partielle d'interférences correspondant à chaque utilisateur ordonnancé sur le bloc de ressources.

**8.** Dispositif selon la revendication 6 ou 7, dans lequel le module de précodage étant plus particulièrement configuré pour : selon les distances entre les utilisateurs ordonnancés sur le bloc de ressources et le dispositif d'extrémité émission, le vecteur de précodage calculé pour chaque utilisateur ordonnancé sur le bloc de ressources s'établit comme suit :

si l'utilisateur ordonnancé est un utilisateur dans l'ensemble d'utilisateurs utilisé pour la suppression partielle d'interférences, le vecteur de précodage de l'utilisateur ordonnancé s'établit alors comme suit :

$$V_k = \left[ H_{cluster}^H (H_{cluster} H_{cluster}^H)^{-1} \right]_k$$

si l'utilisateur ordonnancé est un utilisateur hors de l'ensemble d'utilisateurs utilisé pour la suppression partielle d'interférences, le vecteur de précodage de l'utilisateur ordonnancé s'établit alors comme suit :

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1$$

où $V_k$ représente un vecteur de précodage d'un utilisateur k dans l'ensemble d'utilisateurs, $V_n$ représente un vecteur de précodage d'un utilisateur n hors de l'ensemble d'utilisateurs ; $H_{cluster}$ représente la matrice formée des estimations de canal de tous les utilisateurs dans l'ensemble d'utilisateurs utilisé pour la suppression partielle d'interférences ; $\hat{\underline{h}}_n$ représente une estimation de canal entre l'utilisateur n et le dispositif d'extrémité émission, $H_{cluster}^H$ représente une transposée conjuguée de $H_{cluster}$, $\llcorner \bullet \lrcorner_k$ représente une k-ième colonne d'une matrice et $[\bullet]^H$ représente une transposée conjuguée d'une matrice.

**9.** Dispositif selon la revendication 6, dans lequel le module de sélection de suppression partielle d'interférences est plus particulièrement configuré pour : déterminer la cohérence de canal entre les utilisateurs ordonnancés sur le bloc de ressources ; pour chaque utilisateur ordonnancé sur le bloc de ressources, selon une cohérence de canal entre un utilisateur ordonnancé et d'autres utilisateurs ordonnancés, sélectionner de là un nombre fixé d'utilisateurs ordonnancés par ordre de grand à petit comme l'ensemble d'utilisateurs utilisé pour la suppression partielle d'interférences de l'utilisateur ordonnancé.

**10.** Dispositif selon la revendication 9, dans lequel le module de précodage est plus particulièrement configuré pour : selon la cohérence de canal entre les utilisateurs ordonnancés sur le bloc de ressources, le vecteur de précodage calculé pour chaque utilisateur ordonnancé sur le bloc de ressources s'établit comme suit :

EP 2 999 155 B1

$$V_n = \left[ \begin{bmatrix} \hat{\underline{h}}_n \\ H_{cluster} \end{bmatrix}^H \left( \begin{bmatrix} \hat{\underline{h}}_n \\ H_{cluster} \end{bmatrix} \begin{bmatrix} \hat{\underline{h}}_n \\ H_{cluster} \end{bmatrix}^H \right)^{-1} \right]_1$$

où $V_n$ représente un vecteur de précodage d'un utilisateur n, $n_c$ représente le nombre d'utilisateurs dans l'ensemble d'utilisateurs utilisé pour la suppression partielle d'interférences ; $H_{cluster}$ représente la matrice formée des estimations de canal de tous les utilisateurs dans l'ensemble d'utilisateurs utilisé pour la suppression partielle d'interférences

$$H_{cluster} = \begin{bmatrix} \hat{h}_{\pi(1)} \\ \vdots \\ \hat{h}_{\pi(n_c)} \end{bmatrix}$$

correspondant à l'utilisateur n ; , où $\pi$ représente un ordre séquentiel de faible à grande d'une cohérence de canal entre d'autres utilisateurs et l'utilisateur n et $\pi(1)$ représente un utilisateur présentant la plus faible cohérence de canal avec l'utilisateur n ; $\hat{\underline{h}}_n$ représente une estimation de canal entre un utilisateur hors de l'ensemble d'utilisateurs utilisé pour la suppression partielle d'interférences et le dispositif d'extrémité émission, $H_{cluster}^H$ représente une transposée conjuguée de $H_{cluster}$, $\llcorner\bullet\lrcorner_k$ représente une k-ième colonne d'une matrice et $[\bullet]^H$ représente une transposée conjuguée d'une matrice.

11. Dispositif émetteur de signal, comprenant un dispositif de précodage dans une communication sans fil selon l'une quelconque des revendications 6 à 10, et un module d'ordonnancement, un module d'acquisition d'informations de canal, un module de prétraitement de données et un module de traitement dans le domaine fréquentiel qui sont reliés au dispositif de précodage, et un module émetteur relié au module de traitement dans le domaine fréquentiel, dans lequel :

le module d'ordonnancement est configuré pour fournir au dispositif de précodage des informations relatives à tous les utilisateurs ordonnancés sur un bloc de ressources d'un système de multiplexage par répartition orthogonale en fréquence, noté OFDM ;
le module d'acquisition d'informations de canal est configuré pour acquérir des informations d'estimation de canal relatives aux utilisateurs et les fournir au dispositif de précodage ;
le module de prétraitement de données est configuré pour prétraiter des données relatives aux utilisateurs et les fournir au dispositif de précodage ;
le module de traitement dans le domaine fréquentiel est configuré pour convertir des données dans le domaine fréquentiel précodées par le dispositif de précodage en un signal dans le domaine temporel ; et
le module émetteur est configuré pour émettre le signal dans le domaine temporel traité par le module de traitement dans le domaine fréquentiel.

27

EP 2 999 155 B1

For a given user, suppress interference it causes to all other users

FIG. 1

FIG. 2

For a given user,
suppress interference it
causes to users within
the filled area

FIG. 3

Start — 1

Allocation
of time frequency resource — 2
is finished

Yes → End — 10

No

Select a time frequency
resource block that has — 3
not been distributed

Extract IDs of
scheduled users on the — 4
current time frequency
resource block

Scheduled
users have all been — 5
processed

Yes → Sort the distances between
the scheduled users and — 8
the transmitting end device

No

Select a scheduled
user that has not been — 6
processed

Select $n_c$ users having
closest distance with the — 9
transmitting end device to
form a user set

Compute a distance
between the scheduled — 7
user and a transmitting
end device

FIG. 4

Start — 1

Allocation of time frequency resource is finished — 2

**Yes** → End — 10

**No**

Select a time frequency resource block that has not been distributed — 3

Extract IDs of scheduled users on the current time frequency resource block — 4

Scheduled users have all been processed — 5

**Yes** →

For each scheduled user, sort the channel coherence between the scheduled user and other scheduled users in sequence — 8

**No**

Select a scheduled user that has not been processed — 6

Compute channel coherence between the current scheduled user and other scheduled users — 7

For each scheduled user, select $n_c$ users having high channel coherence to form a user set — 9

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013034187 A1


**Non-patent literature cited in the description**

- Precoding for Multiple Antenna Gaussian Broadcast Channels With Successive Zero-Forcing. **DABBAGH A D et al.** IEEE TRANSACTIONS ON SIGNAL PROCESSING. IEEE SERVICE CENTER, 01 July 2007, vol. 55, 3837-3850